# EUROPÄISCHE PATENTANMELDUNG

(11) **EP 4 714 261 A1**
(43) Veröffentlichungstag der Anmeldung: **25.03.2026**
(21) Anmeldenummer: 24202141.8
(22) Anmeldetag: 24.09.2024
(51) Int. Cl.: A01K 9/00

(54) **VORRICHTUNG ZUR VERSORGUNG VON NUTZTIEREN MIT FLÜSSIGEM NAHRUNGSMITTEL**

(71) Anmelder: Holm, Hannes, 24784 Westerrönfeld (DE); Holm, Hans Joachim, 24784 Westerrönfeld (DE)
(72) Erfinder: Holm, Hannes, 24784 Westerrönfeld (DE); Holm, Hans Joachim, 24784 Westerrönfeld (DE)
(74) Vertreter: Hauck Patent- und Rechtsanwälte PartmbB

(57) **Zusammenfassung**

Vorrichtung zur Versorgung von Nutztieren mit flüssigem Nahrungsmittel mit
• einem Fütterungsautomaten (10), der dazu ausgebildet ist, Nahrungsmittelrationen mit einer Zubereitungstemperatur bereitzustellen,
• einem Saugnuckel (12),
• einer Flüssigkeitsleitung (16), die den Saugnuckel mit dem Fütterungsautomaten verbindet, und
• einer elektronischen Steuerung (24), die dazu ausgebildet ist, mindestens eine Kenngröße zu erfassen und (i) zum Vorwärmen der Flüssigkeitsleitung eine Vorwärmflüssigkeit durch die Flüssigkeitsleitung zu führen und die Menge und/oder Temperatur der Vorwärmflüssigkeit in Abhängigkeit von der Kenngröße einzustellen und/oder (ii) die Zubereitungstemperatur in Abhängigkeit von der Kenngröße einzustellen.

## Beschreibung

Die Erfindung betrifft eine Vorrichtung zur Versorgung von Nutztieren mit flüssigem Nahrungsmittel. Die Vorrichtung weist einen Fütterungsautomaten auf, der Nahrungsmittelrationen mit einer Zubereitungstemperatur bereitstellt und über eine Flüssigkeitsleitung mit einem Saugnuckel verbunden ist.

Derartige Vorrichtungen werden häufig zur Fütterung von Kälbern mit einer Tränke eingesetzt, die von dem Fütterungsautomaten durch Mischen von Milchaustauscher mit temperiertem Wasser und/oder unter Verwendung von Vollmilch zubereitet wird. Die ideale Fütterungstemperatur des flüssigen Nahrungsmittels beträgt für Kälber zum Beispiel etwa 40 °C. Dies ist für die Verdauung im jungen, noch in Entwicklung befindlichen Magensystem die optimale Temperatur. Wegen der unvermeidlichen Abkühlung des flüssigen Nahrungsmittels auf dem Weg vom Fütterungsautomaten zum Saugnuckel ist es bekannt, die Zubereitungstemperatur etwas oberhalb der optimalen Fütterungstemperatur fest einzustellen, zum Beispiel auf 42 °C. In vielen Fällen wird dadurch eine gute Temperierung des flüssigen Nahrungsmittels erzielt.

Davon ausgehend ist es die Aufgabe der Erfindung, die Vorrichtung dahingehend zu verbessern, dass Abweichungen der Fütterungstemperatur reduziert werden.

Diese Aufgabe wird gelöst durch die Vorrichtung mit den Merkmalen des Anspruchs 1. Vorteilhafte Ausgestaltungen sind in den sich anschließenden Unteransprüchen angegeben.

Die Vorrichtung dient zur Versorgung von Nutztieren mit flüssigem Nahrungsmittel und weist folgendes auf:
- einen Fütterungsautomaten, der dazu ausgebildet ist, Nahrungsmittelrationen mit einer Zubereitungstemperatur bereitzustellen,
- einen Saugnuckel,
- eine Flüssigkeitsleitung, die den Saugnuckel mit dem Fütterungsautomaten verbindet, und
- eine elektronische Steuerung, die dazu ausgebildet ist, mindestens eine Kenngröße zu erfassen und (i) zum Vorwärmen der Flüssigkeitsleitung eine Vorwärmflüssigkeit durch die Flüssigkeitsleitung zu führen und die Menge und/oder Temperatur der Vorwärmflüssigkeit in Abhängigkeit von der Kenngröße einzustellen und/oder (ii) die Zubereitungstemperatur in Abhängigkeit von der Kenngröße einzustellen.

Der Fütterungsautomat kann einen Anmischbehälter aufweisen, in dem die Nahrungsmittelrationen zubereitet werden. Hierzu kann Milchaustauscher und temperiertes Wasser in den Anmischbehälter eingefüllt und von einem Rührwerk des Fütterungsautomaten durchmischt werden. Diese Vorgänge können von der elektronischen Steuerung gesteuert werden. Die elektronische Steuerung kann in den Fütterungsautomaten integriert sein. Der Saugnuckel kann nahe an dem Fütterungsautomaten angeordnet sein oder in einem erheblichen Abstand von einem oder mehreren Metern. Die Flüssigkeitsleitung kann in einem Hüllrohr verlegt sein. Die gesamte Flüssigkeitsleitung oder ein Längsabschnitt davon kann unterirdisch verlegt sein. Der Saugnuckel kann an einem Abrufstand angeordnet sein. Die Vorrichtung kann eine Einrichtung zur Erkennung einzelner Tiere aufweisen, zum Beispiel anhand eines RFID-Transponders, der am Ohr des Tiers befestigt ist. Die Einrichtung zur Erkennung kann mit der elektronischen Steuerung verbunden sein, sodass der Fütterungsautomat die Identität des Tiers bei der Zubereitung berücksichtigen kann, zum Beispiel ob das identifizierte Tier noch Anrecht auf weitere Nahrungsmittelrationen hat oder nicht.

Die Erfinder haben erkannt, dass Abweichungen der Fütterungstemperatur am Saugnuckel von der idealen Fütterungstemperatur dem Wohlbefinden und der optimalen Entwicklung der Nutztiere abträglich sind. Insbesondere haben die Erfinder erkannt, dass sich teils sehr große Abweichungen daraus ergeben, dass die Umgebungstemperatur bei heute üblichen Haltungsformen mit weitgehend offen konzipierten Ställen im Winter regelmäßig deutlich unter 0 °C liegen kann und die zum Saugnuckel führende Flüssigkeitsleitung häufig eine Länge von mehreren Metern aufweist. Entlang der Flüssigkeitsleitung kann es dadurch zu einer starken Abkühlung kommen, die sich nicht nur während Trinkpausen, sondern sogar während eines kontinuierlich ablaufenden Trinkvorgangs störend auswirkt.

Zur Lösung der obigen Aufgabe führen gemäß der Erfindung zwei Maßnahmen, die einzeln oder in Kombination angewendet werden können. Bei beiden Lösungen wird mit der Steuerung eine Kenngröße erfasst. Die Kenngröße kann unterschiedlicher Natur sein und sich beispielsweise aus den Eigenschaften der Vorrichtung, aus den Umgebungsbedingungen oder aus den Betriebsbedingungen der Vorrichtung ergeben. In jedem Fall ist die Kenngröße ein signifikanter Einflussfaktor für die Abweichung der Fütterungstemperatur von einer angestrebten Idealtemperatur. Viele Beispiele für geeignete Kenngrößen werden weiter unten diskutiert.

Bei einer der beiden Maßnahmen zur Lösung der Aufgabe wird nach der Erfindung in Abhängigkeit der mindestens einen Kenngröße die Zubereitungstemperatur eingestellt. Die Fütterungstemperatur, d. h. die Temperatur des flüssigen Nahrungsmittels am Saugnuckel, wird also durch geeignetes Anheben oder Absenken der Zubereitungstemperatur in der gewünschten Weise beeinflusst. Durch diese Maßnahme kann die ideale Fütterungstemperatur auch bei wechselnden Anwendungssituationen wie zum Beispiel während unterschiedlicher Jahreszeiten sehr gut eingehalten werden. Dies gilt insbesondere, wenn sich nach einem bereits einige Zeit andauernden Fütterungsvorgang durch die bereits durch die Flüssigkeitsleitung hindurchgeführte Nahrungsmittelmenge annähernd ein stationärer Zustand eingestellt hat.

Zu größeren Abweichungen kann es jedoch kommen, falls die Flüssigkeitsleitung und der Saugnuckel infolge einer Trinkpause bereits deutlich abgekühlt sind. Auf diese Situation zielt die andere der beiden Maßnahmen ab, bei der in Abhängigkeit von der Kenngröße die Menge und/oder Temperatur einer Vorwärmflüssigkeit eingestellt wird. Die Vorwärmflüssigkeit wird ebenfalls von dem Fütterungsautomaten bereitgestellt. Es kann sich zum Beispiel um temperiertes Wasser handeln oder um in üblicher Weise zubereitetes, flüssiges Nahrungsmittel. Zum Vorwärmen der Flüssigkeitsleitung wird diese Vorwärmflüssigkeit durch die Flüssigkeitsleitung geführt. Dabei wird durch geeignete Maßnahmen verhindert, dass die Vorwärmflüssigkeit von einem Nutztier konsumiert wird. Hierfür gibt es unterschiedliche Möglichkeiten. Zum Beispiel kann die Vorwärmflüssigkeit durch den Saugnuckel ausgegeben werden, während der Saugnuckel dem Zugriff der Nutztiere entzogen ist, beispielsweise durch eine Abdeckklappe oder Zurückziehen des Saugnuckels. Nachdem die Vorwärmflüssigkeit in der kenngrößenabhängigen Menge und/oder mit der kenngrößenabhängigen Temperatur durch die Flüssigkeitsleitung geführt wurde, hat sich die Flüssigkeitsleitung hinreichend erwärmt, um ein übermäßiges Abkühlen des im Anschluss durch die Flüssigkeitsleitung geleiteten flüssigen Nahrungsmittels zu vermeiden. Durch geeignetes Vorwärmen kann erreicht werden, dass bereits "der erste Schluck" des einem Nutztier angebotenen, flüssigen Nahrungsmittels die ideale Fütterungstemperatur aufweist.

In einer Ausgestaltung ist in der Flüssigkeitsleitung vor dem Saugnuckel ein Ventil angeordnet, das in einer ersten Ventilstellung die Flüssigkeitsleitung mit dem Saugnuckel verbindet und in einer zweiten Ventilstellung die Flüssigkeitsleitung von dem Saugnuckel trennt und mit einem Auslass verbindet, wobei die elektronische Steuerung mit dem Ventil verbunden und dazu ausgebildet ist, das Ventil zum Vorwärmen der Flüssigkeitsleitung so anzusteuern, dass die Vorwärmflüssigkeit durch die Flüssigkeitsleitung und am Saugnuckel vorbei zu dem Auslass geführt wird. In dieser Ausgestaltung kann das Vorwärmen der Flüssigkeitsleitung ausgeführt werden, während ein Tier Zugriff auf den Saugnuckel hat und bereits auf seine Nahrungsmittelrationen wartet. Nach dem Vorwärmvorgang wird das Ventil in die erste Ventilstellung zurückversetzt und die erste Nahrungsmittelration kann über den Saugnuckel abgegeben werden. Dabei ist die Flüssigkeitsleitung bereits bis zum Ventil vorgewärmt. Das Ventil befindet sich idealerweise kurz vor dem Saugnuckel, sodass gegebenenfalls nicht vorwärmbare Abschnitte der Flüssigkeitsleitung zwischen dem Ventil und dem Saugnuckel vernachlässigt werden können.

In einer Ausgestaltung weist die Vorrichtung eine Heizeinrichtung und eine Pumpe auf und die elektronische Steuerung ist dazu ausgebildet, die Heizeinrichtung und die Pumpe so anzusteuern, dass die eingestellte Menge der Vorwärmflüssigkeit mit der eingestellten Temperatur durch die Flüssigkeitsleitung gefördert wird. Die Heizeinrichtung und/oder die Pumpe können in den Fütterungsautomaten integriert sein. Die Pumpe kann alternativ außerhalb des Fütterungsautomaten und näher am Saugnuckel angeordnet sein und das flüssige Nahrungsmittel ansaugen, z.B. bei Integration der Pumpe in eine Abrufstand. Das flüssige Nahrungsmittel kann unabhängig von einer Pumpe allein durch das Saugen des Nutztiers vom Fütterungsautomaten zum Saugnuckel befördert werden. Für das Hindurchführen der Vorwärmflüssigkeit ist die Pumpe vorgesehen.

In einer Ausgestaltung ist am Saugnuckel oder in der Flüssigkeitsleitung vor dem Saugnuckel ein Temperatursensor angeordnet, der mit der elektronischen Steuerung verbunden ist. Mithilfe dieses Temperatursensors kann während der Nahrungsmittelabgabe die Fütterungstemperatur gemessen und eine Abweichung von der idealen Fütterungstemperatur festgestellt werden. Die mit dem Temperatursensor erfasste Temperatur kann eine der Kenngrößen sein, die von der elektronischen Steuerung beim Einstellen der Zubereitungstemperatur bzw. der Menge und/oder Temperatur der Vorwärmflüssigkeit berücksichtigt wird. Die Einstellung kann jedoch auch unabhängig von der mit dem Temperatursensor gemessenen Temperatur anhand anderer Kenngrößen erfolgen. In diesem Fall dient die mit dem Temperatursensor erfasste Temperatur lediglich der Kontrolle und/oder der weiteren Verbesserung des Verfahrens.

In einer Ausgestaltung ist die elektronische Steuerung dazu ausgebildet, die Einstellung der Zubereitungstemperatur und/oder der Menge und/oder Temperatur der Vorwärmflüssigkeit auf Grundlage der mindestens einen von der Steuerung erfassten Kenngröße in einem selbstlernenden Verfahren fortlaufend zu verbessern. Zur Bewertung der zuvor verwendeten Einstellung kann insbesondere ein Sensor zur Erfassung der Temperatur am Saugnuckel vorgesehen sein, sodass Abweichungen von der idealen Fütterungstemperatur gemessen und an die elektronische Steuerung zurückgemeldet werden können. Das selbstlernende Verfahren (*machine learning*) erlaubt eine kontinuierliche Verbesserung der Einstellung durch die elektronische Steuerung unabhängig von einem genauen Verständnis des mathematischen Zusammenhangs der erfassten Kenngrößen und der resultierenden Abweichungen von der idealen Fütterungstemperatur.

In einer Ausgestaltung ist die elektronische Steuerung dazu ausgebildet, in Abhängigkeit der mindestens einen von der Steuerung erfassten Kenngröße eine erwartete Abkühlung des flüssigen Nahrungsmittels auf dem Weg vom Fütterungsautomaten zum Saugnuckel zu ermitteln und die Zubereitungstemperatur so einzustellen, dass die erwartete Abkühlung kompensiert wird. Die erwartete Abkühlung kann unter Berücksichtigung mathematischer Zusammenhänge berechnet oder anhand von Erfahrungswerten abgeschätzt werden. Dann kann die Zubereitungstemperatur so eingestellt werden, dass die erwartete Abkühlung voraussichtlich kompensiert wird. Hierfür wird die Zubereitungstemperatur entsprechend höher eingestellt als die ideale Fütterungstemperatur. Idealerweise führt dies zu einer vollständigen Kompensation der erwarteten Abkühlung und dem genauen Erreichen der idealen Fütterungstemperatur. Einbezogen ist jedoch auch eine nur teilweise Kompensation der erwarteten Abkühlung, die zu einer weiteren Annäherung an die ideale Fütterungstemperatur führt.

In einer Ausgestaltung ist die elektronische Steuerung dazu ausgebildet, die erwartete Abkühlung anhand einer beim Abruf einer vorherigen Nahrungsmittelration erfassten Abkühlung zu ermitteln. Die erfasste Abkühlung kann insbesondere mit dem erwähnten Temperatursensor unter Berücksichtigung der Zubereitungstemperatur der vorherigen Nahrungsmittelration bestimmt werden. Insbesondere wenn die aktuelle Nahrungsmittelration unmittelbar nach der vorherigen Nahrungsmittelration oder in kurzem zeitlichen Abstand davon zubereitet wird, ist die zuvor erfasste Abkühlung ein sehr guter Schätzwert für die für die aktuelle Nahrungsmittelration zu erwartende Abkühlung.

In einer Ausgestaltung ist die elektronische Steuerung dazu ausgebildet, während einer Mahlzeit eines Nutztieres, die mehrere aufeinanderfolgende Nahrungsmittelrationen umfasst, für aufeinanderfolgende Nahrungsmittelrationen unterschiedliche Zubereitungstemperaturen einzustellen. Dadurch kann zum Beispiel berücksichtigt werden, dass die erste Nahrungsmittelration einer Mahlzeit nach einer längeren Pause verabreicht wird, während die zweite Nahrungsmittelration derselben Mahlzeit in kurzem zeitlichen Abstand bzw. unmittelbar nach der ersten Nahrungsmittelration verabreicht wird. Die zu erwartende Abkühlung bei der zweiten Nahrungsmittelration ist daher geringer und es ist sinnvoll, die Zubereitungstemperatur der zweiten Nahrungsmittelration entsprechend zu verringern.

In einer Ausgestaltung umfasst die mindestens eine von der Steuerung erfasste Kenngröße eine installationsabhängige Kenngröße, die von einer Person eingegeben worden ist, insbesondere betreffend eine Länge der Flüssigkeitsleitung, ein Volumen der Flüssigkeitsleitung, eine thermische Isolation der Flüssigkeitsleitung und/oder eine Anordnung der Flüssigkeitsleitung. Hinsichtlich der Anordnung der Flüssigkeitsleitung kann zum Beispiel zwischen einer über- und unterirdischen Verlegung unterschieden werden. Diese Kenngrößen können zwischen unterschiedlichen Installationen der Vorrichtung große Unterschiede aufweisen, stehen nach Installation der Vorrichtung jedoch fest. Sie können darum von einer Person einmalig eingegeben werden, zum Beispiel bei Inbetriebnahme der Vorrichtung. Alle genannten Kenngrößen haben unmittelbaren Einfluss auf die Abkühlung des flüssigen Nahrungsmittels auf dem Weg durch die Flüssigkeitsleitung. Sind sie der Steuerung bekannt, können sie bei der Einstellung der Zubereitungstemperatur und/oder der Menge und/oder Temperatur der Vorwärmflüssigkeit gewinnbringend berücksichtigt werden.

In einer Ausgestaltung umfasst die mindestens eine von der Steuerung erfasste Kenngröße einen Umgebungsparameter, insbesondere eine Lufttemperatur und/oder eine Bodentemperatur. Die genannten Umgebungsparameter können mithilfe eines geeigneten Temperatursensors, der mit der Steuerung verbunden ist, erfasst werden. Die Bodentemperatur spielt insbesondere dann eine entscheidende Rolle, wenn mindestens ein Abschnitt der Flüssigkeitsleitung unterirdisch verlegt ist.

In einer Ausgestaltung umfasst die mindestens eine von der Steuerung erfasste Kenngröße einen Betriebsparameter der Vorrichtung, insbesondere eine Temperatur in der Flüssigkeitsleitung und/oder im Saugnuckel, eine seit dem Abruf einer vorherigen Nahrungsmittelration verstrichene Zeit und/oder eine Anzahl der während einer aktuellen Mahlzeit des Nutztieres zuvor zubereiteten Nahrungsmittelrationen. Die Temperatur in der Flüssigkeitsleitung und/oder im Saugnuckel kann wiederum mit einem geeigneten Temperatursensor der Vorrichtung gemessen werden. Die übrigen beispielhaft genannten Betriebsparameter sind der Steuerung aufgrund der zuvor ausgeführten Abläufe bekannt und können entsprechend berücksichtigt werden.

Nachfolgend wird die Erfindung anhand einer Figur näher erläutert.

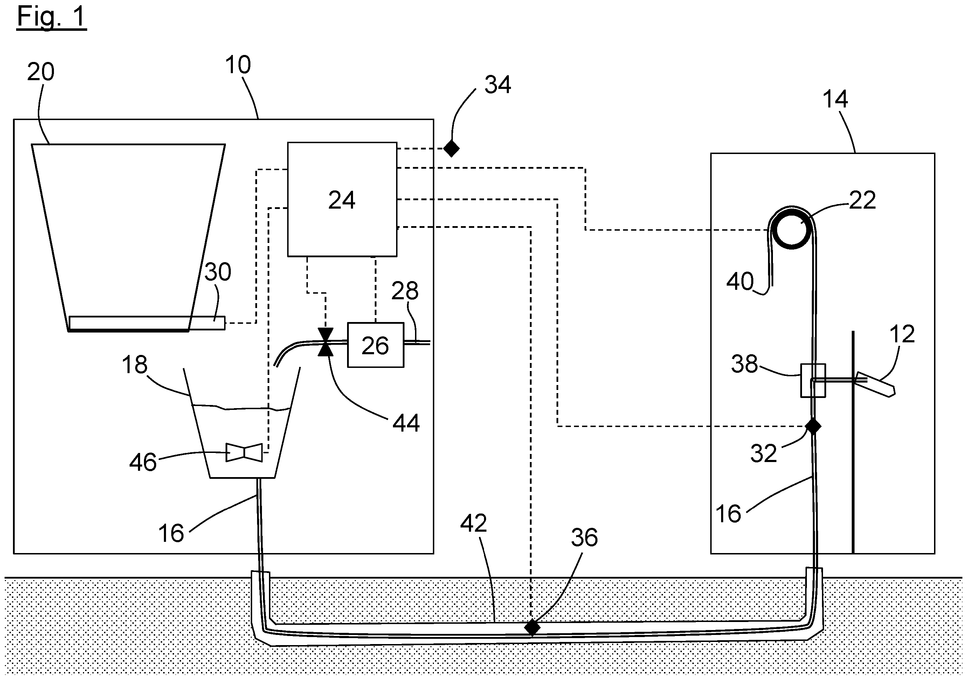

Fig. 1 zeigt schematisch eine Vorrichtung zur Versorgung von Nutztieren mit einem flüssigen Nahrungsmittel.

Die Vorrichtung weist einen Fütterungsautomaten 10 und einen Saugnuckel 12 auf, der in einem Abrufstand 14 angeordnet ist. Der Fütterungsautomat 10 ist über eine Flüssigkeitsleitung 16 mit dem Saugnuckel 12 verbunden. Die Flüssigkeitsleitung 16 weist insgesamt eine Länge von mehreren Metern auf, wobei ein Abschnitt der Flüssigkeitsleitung 16 unterirdisch in einem Hüllrohr 42 verlegt ist.

Der Fütterungsautomat 10 weist einen Anmischbehälter 18 sowie einen Vorratsbehälter 20 für Milchaustauscher auf. Außerdem umfasst der Fütterungsautomat 10 eine elektronische Steuerung 24, die mit einem in der Wasserleitung 28 angeordneten elektrischen Boiler 26 und einem Ventil 44 verbunden ist und durch Steuern des Boilers 26 und des Ventils 44 temperiertes Wasser in den Anmischbehälter 18 einfüllen kann.

Die elektronische Steuerung 24 ist außerdem mit einer Dosiereinrichtung 30 verbunden, mit der der Milchaustauscher aus dem Vorratsbehälter 20 in den Anmischbehälter 18 dosiert werden kann, und mit einem in dem Anmischbehälter 18 angeordneten Rührwerk 46. Die elektronische Steuerung 24 kann somit Nahrungsmittelrationen mit einer einstellbaren Zubereitungstemperatur in dem Anmischbehälter 18 bereitstellen.

Die elektronische Steuerung 24 ist verbunden mit einem ersten Temperatursensor 34 zur Erfassung der Lufttemperatur der Umgebung, einem zweiten Temperatursensor 36 zur Erfassung einer Bodentemperatur im Bereich der unterirdisch verlegten Flüssigkeitsleitung 16, und einem dritten Temperatursensor 32, der in der Flüssigkeitsleitung 16 kurz vor dem Saugnuckel 12 und vor einem Ventil 38 angeordnet ist. Die elektronische Steuerung 24 verwendet die von den Temperatursensoren 32, 34, 36 erfassten Temperaturen als Kenngrößen für die Einstellung der Zubereitungstemperatur.

Weiterhin weist die Vorrichtung eine Pumpe 22 auf, die in dem Abrufstand 14 angeordnet ist. In der Flüssigkeitsleitung 16 ist vor dem Saugnuckel ein Ventil 38 angeordnet, das die Flüssigkeitsleitung 16 wahlweise mit dem Saugnuckel 12 oder mit einem Auslass 40 verbindet.

Zum Vorwärmen der Flüssigkeitsleitung 16 kann die elektronische Steuerung 24 eine bestimmte Wassermenge mit einer bestimmten Temperatur in dem Anmischbehälter 18 bereitstellen und mit der Pumpe 22 durch die Flüssigkeitsleitung 16 und das Ventil 38 zum Auslass 40 fördern. Die Menge dieser Vorwärmflüssigkeit kann ebenso wie ihre Temperatur von der elektronischen Steuerung 24 in Abhängigkeit einer oder mehrerer Kenngrößen eingestellt werden, zum Beispiel in Abhängigkeit einer mit dem dritten Temperatursensor 32 erfassen Temperatur in der Flüssigkeitsleitung 16.

### Liste der Bezugszeichen

- 10: Fütterungsautomat
- 12: Saugnuckel
- 14: Abrufstand
- 16: Flüssigkeitsleitung
- 18: Anmischbehälter
- 20: Vorratsbehälter
- 22: Pumpe
- 24: elektronische Steuerung
- 26: Boiler
- 28: Wasserleitung
- 30: Dosiereinrichtung
- 32: dritter Temperatursensor
- 34: erster Temperatursensor
- 36: zweiter Temperatursensor
- 38: Ventil
- 40: Auslass
- 42: Hüllrohr
- 44: Ventil
- 46: Rührwerk

## Patentansprüche

1. Vorrichtung zur Versorgung von Nutztieren mit flüssigem Nahrungsmittel mit
• einem Fütterungsautomaten (10), der dazu ausgebildet ist, Nahrungsmittelrationen mit einer Zubereitungstemperatur bereitzustellen,
• einem Saugnuckel (12),
• einer Flüssigkeitsleitung (16), die den Saugnuckel (12) mit dem Fütterungsautomaten (10) verbindet, und
• einer elektronischen Steuerung (24), **dadurch gekennzeichnet, dass**
• die elektronische Steuerung (24) dazu ausgebildet ist, mindestens eine Kenngröße zu erfassen und (i) zum Vorwärmen der Flüssigkeitsleitung (16) eine Vorwärmflüssigkeit durch die Flüssigkeitsleitung (16) zu führen und die Menge und/oder Temperatur der Vorwärmflüssigkeit in Abhängigkeit von der Kenngröße einzustellen und/oder (ii) die Zubereitungstemperatur in Abhängigkeit von der Kenngröße einzustellen.

2. Vorrichtung nach Anspruch 1, **dadurch gekennzeichnet, dass** in der Flüssigkeitsleitung (16) vor dem Saugnuckel (12) ein Ventil (38) angeordnet ist, das in einer ersten Ventilstellung die Flüssigkeitsleitung (16) mit dem Saugnuckel (12) verbindet und in einer zweiten Ventilstellung die Flüssigkeitsleitung (16) von dem Saugnuckel (12) trennt und mit einem Auslass (40) verbindet, wobei die elektronische Steuerung (24) mit dem Ventil (38) verbunden und dazu ausgebildet ist, das Ventil (38) zum Vorwärmen der Flüssigkeitsleitung (16) so anzusteuern, dass die Vorwärmflüssigkeit durch die Flüssigkeitsleitung (16) und am Saugnuckel (12) vorbei zu dem Auslass (40) geführt wird.

3. Vorrichtung nach Anspruch 1 oder 2, **dadurch gekennzeichnet, dass** die Vorrichtung eine Heizeinrichtung und eine Pumpe (22) aufweist und die elektronische Steuerung (24) dazu ausgebildet ist, die Heizeinrichtung und die Pumpe (22) so anzusteuern, dass die eingestellte Menge der Vorwärmflüssigkeit mit der eingestellten Temperatur durch die Flüssigkeitsleitung (16) gefördert wird.

4. Vorrichtung nach einem der Ansprüche 1 bis 3, **dadurch gekennzeichnet, dass** am Saugnuckel (12) oder in der Flüssigkeitsleitung (16) vor dem Saugnuckel (12) ein Temperatursensor angeordnet ist, der mit der elektronischen Steuerung (24) verbunden ist.

5. Vorrichtung nach einem der Ansprüche 1 bis 4, **dadurch gekennzeichnet, dass** die elektronische Steuerung (24) dazu ausgebildet ist, die Einstellung der Zubereitungstemperatur und/oder der Menge und/oder Temperatur der Vorwärmflüssigkeit auf Grundlage der mindestens einen von der elektronischen Steuerung (24) erfassten Kenngröße in einem selbstlernenden Verfahren fortlaufend zu verbessern.

6. Vorrichtung nach einem der Ansprüche 1 bis 5, **dadurch gekennzeichnet, dass** die elektronische Steuerung (24) dazu ausgebildet ist, in Abhängigkeit der mindestens einen von der elektronischen Steuerung (24) erfassten Kenngröße eine erwartete Abkühlung des flüssigen Nahrungsmittels auf dem Weg vom Fütterungsautomaten (10) zum Saugnuckel (12) zu ermitteln und die Zubereitungstemperatur so einzustellen, dass die erwartete Abkühlung kompensiert wird.

7. Vorrichtung nach Anspruch 6, **dadurch gekennzeichnet, dass** die elektronische Steuerung (24) dazu ausgebildet ist, die erwartete Abkühlung anhand einer beim Abruf einer vorherigen Nahrungsmittelration erfassten Abkühlung zu ermitteln.

8. Vorrichtung nach einem der Ansprüche 1 bis 7, **dadurch gekennzeichnet, dass** die elektronische Steuerung (24) dazu ausgebildet ist, während einer Mahlzeit eines Nutztieres, die mehrere aufeinanderfolgende Nahrungsmittelrationen umfasst, für aufeinanderfolgende Nahrungsmittelrationen unterschiedliche Zubereitungstemperaturen einzustellen.

9. Vorrichtung nach einem der Ansprüche 1 bis 8, **dadurch gekennzeichnet, dass** die mindestens eine von der Steuerung erfasste Kenngröße eine installationsabhängige Kenngröße umfasst, die von einer Person eingegeben worden ist, insbesondere betreffend eine Länge der Flüssigkeitsleitung (16), ein Volumen der Flüssigkeitsleitung (16), eine thermische Isolation der Flüssigkeitsleitung (16) und/oder eine Anordnung der Flüssigkeitsleitung (16).

10. Vorrichtung nach einem der Ansprüche 1 bis 9, **dadurch gekennzeichnet, dass** die mindestens eine von der Steuerung erfasste Kenngröße ein Umgebungsparameter umfasst, insbesondere eine Lufttemperatur und/oder eine Bodentemperatur.

11. Vorrichtung nach einem der Ansprüche 1 bis 10, **dadurch gekennzeichnet, dass** die mindestens eine von der Steuerung erfasste Kenngröße einen Betriebsparameter der Vorrichtung umfasst, insbesondere eine Temperatur in der Flüssigkeitsleitung (16) und/oder im Saugnuckel (12), eine seit dem Abruf einer vorherigen Nahrungsmittelration verstrichene Zeit und/oder eine Anzahl der während einer aktuellen Mahlzeit eines Nutztieres zuvor zubereiteten Nahrungsmittelrationen.
